# EUROPEAN PATENT SPECIFICATION

(11) **EP 1 818 859 B1**
(45) Date of publication and mention of the grant of the patent: **09.12.2009**
(21) Application number: 06002658.0
(22) Date of filing: 09.02.2006
(51) Int. Cl.: G06K 19/077, G06K 17/00, G06K 7/08, G06K 7/10

(54) **Wire harness with RFID tags mounted on connectors and harness mounting method**
Kabelbaum mit RFID-Etiketten an Steckern des Kabelbaums und Kabelbaummontageverfahren
Etiquettes RFID montées sur les connecteurs d'un faisceau et procédé de montage d'un faisceau

(43) Date of publication of application: 15.08.2007
(73) Proprietor: HITACHI, LTD., Chiyoda-ku Tokyo 100-8280 (JP)
(72) Inventor: Sakama, Isao Hitachi, Ltd. Intel. Property Office, Chiyoda-ku Tokyo 100-8220 (JP); Ashizawa, Minoru Hitachi, Ltd. Intel. Prop. Office, Chiyoda-ku Tokyo 100-8220 (JP)
(74) Representative: Strehl Schübel-Hopf & Partner

(56) References cited:
- US-A1- 2005 215 119
- US-A1- 2006 049 942
- FINKENZELLER K: "RFID-Handbuch, Grundlagen und praktische Anwendungen induktiver Funkanlagen, Transponder und kontaktloser Chipkarten" RFID HANDBOOK: GRUNDLAGEN UND PRAKTISCHE ANWENDUNGEN, XX, XX, 2002, pages 29-61, XP002350424
- PATENT ABSTRACTS OF JAPAN vol. 2003, no. 12, 5 December 2003 (2003-12-05) & JP 2004 152543 A (AUTO NETWORK GIJUTSU KENKYUSHO:KK; SUMITOMO WIRING SYST LTD; SUMITOMO), 27 May 2004 (2004-05-27)

## Description

### BACKGROUND OF THE INVENTION

The present invention relates to an IC tag mounting for a harness which mounts a wireless IC tag to transmit information recorded in an IC chip from an antenna in a wireless form, and a harness mounting method for mounting this IC tag-mounted harness on an electrical apparatus.

In recent years, wireless IC tags are used vigorously to confirm articles or confirm fitting states of articles. For example, JP-A-2004-152543 discloses a technique for mounting a wireless IC tag on a connector, reading information in the connector, and sensing the fitting state of the connector. This technique is constructed to mount a tag chip including an IC chip and a minute antenna on a male side of the connector, transmit information stored in the tag chip to an antenna disposed on a substrate which fixes a female side of the connector, and make a reader/writer mounted on the antenna read information stored in the tag chip without making a contact. At this time, the radio wave propagation distance between the minute antenna on the female side of the connector and the antenna on the male side is approximately 3 mm, and the reader/writer receives the radio wave of the antenna in the state in which the reader/writer is mounted on the antenna. Therefore, the information stored in the tag chip can be transmitted from the reader/writer by a CPU in an electrical apparatus (for example, such as an ECU (electronic control unit) on a vehicle) without being leaked to the outside.

In the technique disclosed in JP-A-2004-152543, however, there is a drawback that the information stored in the tag chip cannot be read unless the reader/writer is within an extremely short distance from the antenna, although there is an advantage that the information stored in the tag chip does not leak to the outside. For example, when reading information stored in the tag chip and checking whether one of the connectors is fitted into the other normally, the reader/writer must be brought into an extremely short distance from the antenna and the fitting state must be inspected, resulting in a problem of being inconvenient to use.

US 2005/215119 A1 discloses a harness assembly with an IC tag with the features in the preamble of claim 1.

### SUMMARY OF THE INVENTION

In view of the problems heretofore described, the present invention has been achieved. An object of the present invention is to provide an IC tag mounting on a harness capable of simply checking the fitting state of a harness and fitting errors by reading information stored in a wireless IC tag in the harness from a desired position, and a harness mounting method for mounting this IC tag harness on an electrical apparatus.

The harness assembly suggested by the present invention in view of the above problems and objects is defined in claim 1. Further advantageous features are set out in the dependent claims.

### BRIEF DESCRIPTION OF THE DRAWINGS

FIG. 1 is a diagram showing a connector portion of a wire harness used in an embodiment of the present invention;
FIGS. 2A-2B are schematic configuration diagrams of an IC tag mounting on a harness in a first example useful to understand the present invention, in which FIG. 2A shows a state before fitting, and FIG. 2B shows a state after fitting;
FIGS. 3A-3B are schematic configuration diagrams of an IC tag mounting on a harness in an embodiment of the invention, in which FIG. 3A shows a state before fitting, and FIG. 3B shows a state after fitting;
FIGS. 4A-4D are diagrams showing variations of an arrangement pattern of auxiliary antennas in the IC tag-mounted harnesses in the first example and the embodiment;
FIGS. 5A-5C are concept diagrams showing states in which wireless IC tags are mounted respectively so as to be associated with fitting purposes in wire harnesses having the same shape;
FIG. 6 is a concept diagram of a semiconductor manufacturing apparatus for implementing a harness mounting method; and
FIG. 7 is a flow chart for implementing a method of mounting a harness on a semiconductor manufacturing apparatus.

### DETAILED DESCRIPTION OF THE INVENTION

Hereafter, several examples useful to understand the invention and preferred embodiments of an IC tag mounting on a harness according to the present invention will be described with reference to the drawings. In the drawings used for examples and embodiments hereafter described, the same components are denoted by like numerals. In the examples and embodiments hereafter described, a mounting state in which wires are connected to a harness is referred to as wire harness in order to image a specific mounting state of the harness.

First, an outline of an IC tag mounting on a harness in the examples and embodiments whereafter described. In the IC tag-mounted harness according to the first example, an IC chip and a minute antenna for transmitting information recorded in the IC chip by using a radio wave are mounted on one of connectors in a wire harness (for example, a male connector), whereas an auxiliary antenna for amplifying a weak radio wave transmitted from the minute antenna and transmitting the amplified radio wave are mounted on the other of connectors in the wire harness. Mounting positions of the minute antenna and the auxiliary antenna are made close to have a distance of 1.0 mm or less (for example, approximately 0.5 mm) between so as to make it possible for the auxiliary antenna to amplify the radio wave emitted from the minute antenna when the one of the connectors in the wire harness is fitted into the other normally. Only when one of the connectors is fitted into the other normally, therefore, the auxiliary antenna amplifies the weak radio wave emitted by the minute antenna and transmits the amplified radio wave. Therefore, it is possible to detect whether fitting is conducted normally in the wire harness by receiving the signal at a reader/writer.

According to the present invention, a minute antenna mounting a first IC chip and transmitting information stored in the first IC chip, and an ordinary antenna mounting a second IC chip and transmitting information stored in the second IC chip by means of a strong radio wave are mounted on one of the connectors in the harness so as to be parallel to the fitting direction. An auxiliary antenna amplifying the weak radio wave emitted by the minute antenna and transmitting the amplified radio wave is mounted on the other of the connectors in the wire harness. At this time, the mounting position of the auxiliary antenna is determined as described below. The auxiliary antenna is positioned so as to make the distance between the minute antenna and the auxiliary antenna equal to 1.0 mm or less (for example, approximately 0.5 mm) and make the auxiliary antenna hang over the ordinary antenna to intercept a strong radio wave emitted by the ordinary antenna, when one of the connectors is fitted into the other normally. As a result, the auxiliary antenna amplifies the radio wave emitted by the minute antenna and transmits the amplified radio wave, when one of the connectors is fitted into the other normally. By receiving a radio wave from the auxiliary antenna or the ordinary antenna, therefore, it is possible to distinguish between the state in which one of the connectors is fitted into the other normally and a state in which one of the connectors is not fitted into the other normally, and it is also possible to identify a harness on which one of the connectors is not fitted into the other.

### <First Example>

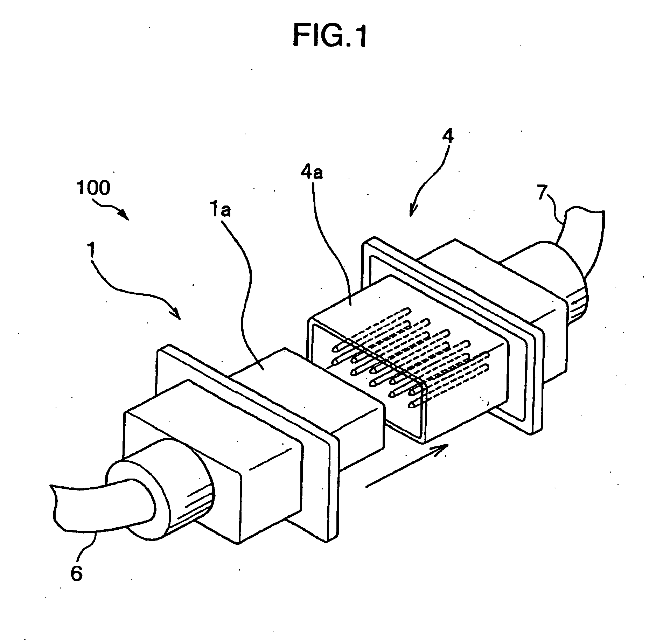

FIG. 1 is a diagram showing connector portions of the wire harness used in the present embodiment. A male connector 1 includes an insertion end 1a. A female connector 4 includes an accepting frame 4a. When the insertion end 1a of the male connector 1 is inserted into the accepting frame 4a in an insertion direction indicated by an arrow as far as a bottom of the accepting frame 4a, connection in the wire harness is conducted, whereby one or more first electrical members 6 are electrically connected to one or more second electrical members 7. At this time, a predetermined gap is formed between an outside periphery face of the insertion end 1a and an inside periphery face of the accepting frame 4a.

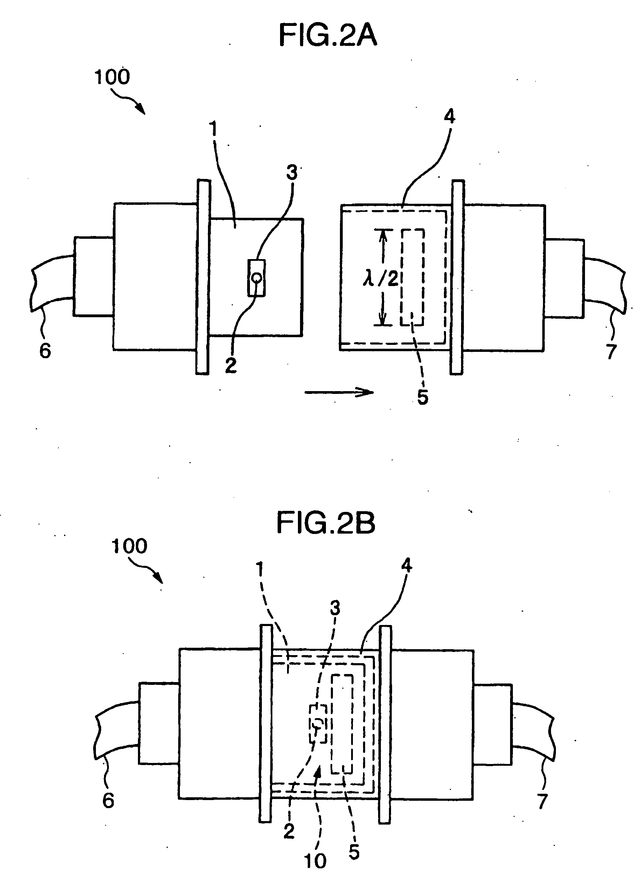

FIGS. 2A-2B are schematic configuration diagrams of an IC tag mounting on a harness 100 in the present example, in which FIG. 2A shows a state before fitting, and FIG. 2B shows a state after fitting. In the ensuing description, the surface of the insertion end 1a of the male connector 1 is referred to as surface of the male connector 1, and the surface or inside face of the accepting frame 4a of the female connector 4 is referred to as surface or inside face of the female connector, for brevity of the description.

As shown in FIG. 2A, a minute antenna 3 having an IC chip 2 placed substantially on its center is mounted on the surface of the male connector 1 included in the wire harness. The IC chip 2 is housed in a small package that has, for example, a width of approximately 0.4 mm, a length of approximately 0.4 mm, and a height of approximately 0.1 mm. Various kinds of information concerning the wire harness are previously recorded in the IC chip 2. The minute antenna 3 having the package of the IC chip 2 mounted thereon is so small that it cannot transmit a radio wave that can be read to the outside of the wire harness 100 (in other words, it can transmit the radio wave as far as only approximately several mm). For example, the minute antenna 3 has a size that is approximately 1.6 mm in width and approximately 7 mm in length.

An auxiliary antenna 5 for amplifying a weak radio wave emitted by the minute antenna 3 and transmitting the amplified radio wave into a desired direction is mounted on the surface or inside face of the female connector 4 included in the wire harness. The auxiliary antenna 5 has an electrical length of λ/2. Here, λ is not a wavelength of the radio wave in the vacuum, but it is a wavelength of the radio wave in use on a dielectric which is a basic material of the auxiliary antenna 5. The auxiliary antenna 5 has a width of approximately 1.6 mm which is the same as the minute antenna 3 has. Mounting positions of the minute antenna 3 and the auxiliary antenna 5 have a position relation so as to make the distance between the minute antenna 3 and the auxiliary antenna 5 equal to 1.0 mm or less (for example, approximately 0.5 mm) when the male connector 1 is fitted into the female connector 4 normally.

In other words, if the male connector 1 is fitted into the female connector 4 normally as shown in FIG. 2B, the distance between the minute antenna 3 and the auxiliary antenna 5 becomes 1.0 mm or less (for example, approximately 0.5 mm), and consequently the weak radio wave emitted by the minute antenna 3 to transmit the information stored in the IC chip 2 can be amplified by the auxiliary antenna 5 and transmitted to a desired direction. On the other hand, when the male connector 1 is not fitted into the female connector 4 normally, the deviation width between the minute antenna 3 and the auxiliary antenna 5 becomes larger than 0.5 mm, and consequently the weak radio wave emitted by the minute antenna 3 is not amplified by the auxiliary antenna 5 and transmitted.

Thus, only when the male connector is fitted into the female connector normally, a wireless IC tag which can conduct transmission is formed of the minute antenna 3 having the IC chip 2 placed thereon (stuck thereto) and the auxiliary antenna 5. Since the information stored in the IC chip 2 can be transmitted to the outside, it is possible to read the information stored in the IC chip 2 which is placed on (stuck to) the connector, by using the reader/writer, and detect whether the male connector is fitted into the female connector normally.

The IC tag 10 mounted on harness 100 according to the first example is constructed as heretofore described. The minute antenna 3 and the auxiliary antenna 5 can be formed by depositing metal thin films on the surface of the male connector 1 and the inside face of the female connector 4 by means of evaporation. Or they can be formed by sticking metal to each of the connectors.

### <Embodiment>

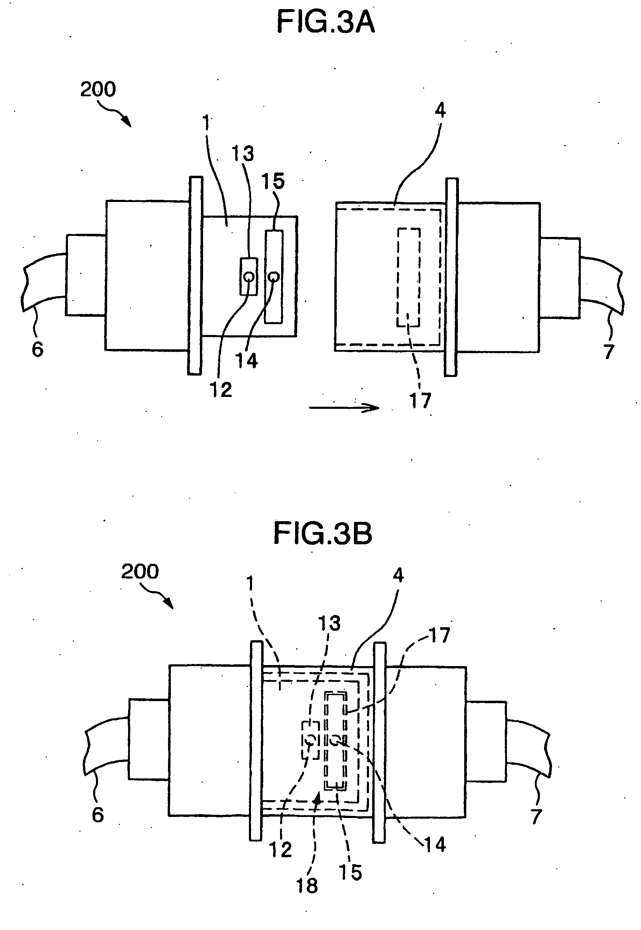

FIGS. 3A-3B are schematic configuration diagrams of an IC tag 18 mounted on a harness 200 in an embodiment of the invention, in which FIG. 3A shows a state before fitting, and FIG. 3B shows a state after fitting. As shown in FIG. 3A, a minute antenna 13 having an IC chip 12 placed nearly on the center thereof and an ordinary antenna 15 having an IC chip 14 placed nearly on the center thereof are mounted on the surface of the male connector 1 included in the harness 200 so as to be parallel to each other. Each of the IC chip 12 and the IC chip 14 is housed in a small package that has, for example, a width of approximately 0.4 mm, a depth of approximately 0.4 mm, and a height of approximately 0.1 mm. Various kinds of information concerning the wire harness are previously recorded in the IC chip 12 and the IC chip 14.

The minute antenna 13 is so small that it can transmit only a weak radio wave in the same way as the first embodiment. For example, the minute antenna 13 has a size that is approximately 1.6 mm in width and approximately 7 mm in length. On the other hand, the ordinary antenna 15 is large enough to transmit information stored in the IC chip 14 with a strong wave as far as a position outside the wire harness 200 where the information can be read. (In other words, the ordinary antenna has a radio wave strength with which transmission over a distance of at least several tens cm can be conducted.) For example, the ordinary antenna 15 has a width of approximately 1.6 mm and an electrical length of approximately λ/2.

An auxiliary antenna 17 for amplifying a weak radio wave emitted by the minute antenna 13, transmitting the amplified radio wave to a desired direction, and intercepting a strong radio wave transmitted from the ordinary antenna 15 when hanging over the ordinary antenna 15 is mounted on the surface or inside face of the female connector 4 included in the wire harness. The auxiliary antenna 17 has an electrical length of λ/2 in order to transmit a strong radio wave. The auxiliary antenna 17 has a width of approximately 1.6 mm which is the same as the minute antenna 3 has.

Mounting positions of the minute antenna 13, the ordinary antenna 15, and the auxiliary antenna 17 have position relations so as to make the distance between the minute antenna 13 and the auxiliary antenna 17 equal to 1.0 mm or less (for example, approximately 0.5 mm) and the auxiliary antenna 17 hangs just over the ordinary antenna 15, when the male connector 1 is fitted into the female connector 4 normally.

In other words, if the male connector 1 is fitted into the female connector 4 normally as shown in FIG. 3B, the deviation between the minute antenna 13 and the auxiliary antenna 17 becomes approximately 0.5 mm, and consequently the weak radio wave emitted by the minute antenna 13 to transmit the information stored in the IC chip 12 can be amplified by the auxiliary antenna 17 and transmitted.

When the male connector 1 is fitted into the female connector 4 normally, the auxiliary antenna 17 hangs over the ordinary antenna 15, and consequently the strong radio wave transmitted from the ordinary antenna 15 is intercepted by the auxiliary antenna 17 and prevented from being transmitted to the outside.

When the male connector 1 is fitted into the female connector 4 normally, information stored in the IC chip 12 can be read via the auxiliary antenna 17 by the reader/writer, but information stored in the IC chip 14 placed on the ordinary antenna 15 cannot be read. By reading the information stored in the IC chip 12, it can be detected that the male connector is fitted into the female connector normally.

On the other hand, when the male connector 1 is not fitted into the female connector 4 normally, the deviation width between the minute antenna 13 and the auxiliary antenna 17 becomes larger than, for example, 0.5 mm, and consequently the auxiliary antenna 17 cannot amplify and transmit the weak radio wave emitted by the minute antenna 13. Under such an abnormal fitting state, however, the auxiliary antenna 17 does not completely hang over the ordinary antenna 15, and consequently the ordinary antenna 15 transmits a strong radio wave to the outside. Therefore, the reader/writer can read the information stored in the IC chip 14 placed on the ordinary antenna 15, and thereby it can be detected that the male connector is not fitted into the female connector normally. In this way, it is possible to distinguish between the state in which the male connector is fitted into the female connector normally and the state in which the male connector is not fitted into the female connector normally. In addition, when there are a plurality of wire harnesses, it is possible to identify connectors that are not fitted.

In the IC tag 18 mounted on harness 200 in the embodiment as well, the minute antenna 13, the ordinary antenna 15 and the auxiliary antenna 17 can be formed by depositing a metal thin film over each of the connectors by means of evaporation. Or they can be formed by adhering metal foil to the connectors.

Instead of forming each of the minute antenna, the ordinary antenna and the auxiliary antenna on the surface or inside face of a connector as shown in FIGS. 2A-2B (the first example) and FIGS. 3A-3B (the embodiment), desired antennas may be formed by using vacant terminals on the connector and providing antenna wiring. For example, if wiring having a length of λ/4 connected to an IC chip is connected to an idle terminal on the male connector and wiring having a length of λ/4 is connected to an idle terminal on the female connector opposed to the male connector, an antenna of λ/2 is formed when the male connector is connected to the female connector and information indicating the connection state can be transmitted to the outside with a strong radio wave. In addition, if there are at least two idle terminals, an antenna of λ/2 is formed when the male connector and the female connector are connected to each other by, for example, connecting wiring having a length of λ/2 connected to an IC chip between two idle terminals on the male connector and connecting short-circuit wiring between two idle terminals on the female connector opposed to the male connector. Therefore, information stored in the IC chip to indicate the connection state can be transmitted to the outside. Besides, if wiring of various forms is provided by using idle terminals on the connector, a radio wave for distinguishing between the time when the male connector is connected to the female connector and the time when the male connector is not connected to the female connector can be transmitted to the outside.

### <Arrangement Pattern of Auxiliary Antenna>

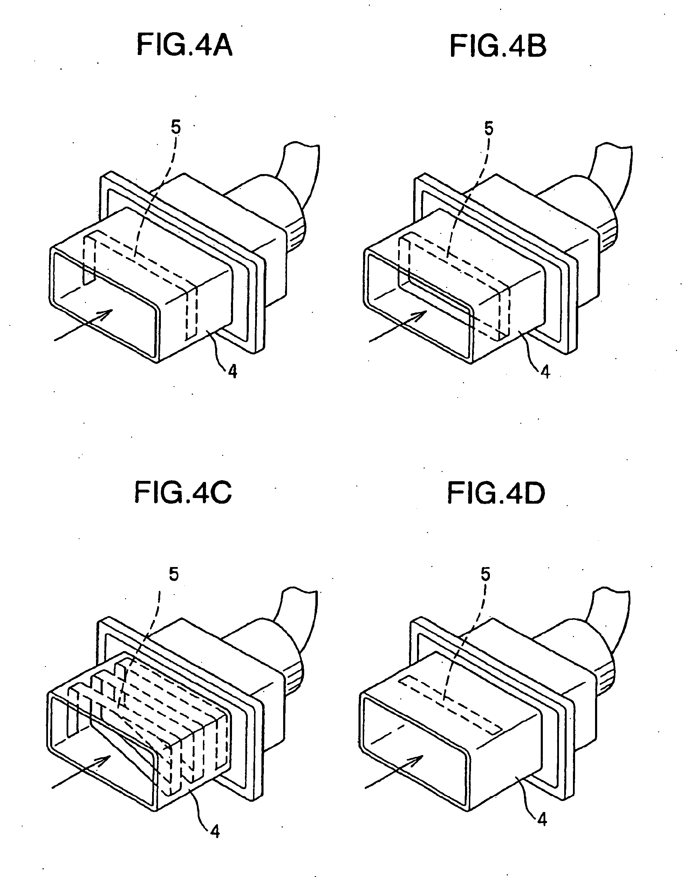

FIGS. 4A-4D are diagrams showing variations of an arrangement pattern on the auxiliary antenna in the IC tag mounting on connectors of a harness in the first example and the embodiment. When mounting an auxiliary antenna 5 on one of the connectors (for example, the female connector 4), the auxiliary antenna 5 is disposed so as to surround the insertion direction on the surface or inside face of the female connector 4 and take the shape of as shown in FIG. 4A. By doing so, the antenna length can be easily set to λ/2 even in a connector having a small size. As shown in FIG. 4B, the auxiliary antenna 5 may be wound and disposed in a single-turn loop form so as to surround the insertion direction on the inside face or surface of the female connector 4 to have an antenna length of, for example, λ. As shown in FIG. 4C, the auxiliary antenna 5 may be wound in a loop form having at least two turns so as to surround the insertion direction and one end of the auxiliary antenna 5 may be connected to the ground. If the connector is large, the auxiliary antenna 5 may not be disposed so as to take the shape of, but may be disposed straightly on one face perpendicular to the insertion direction of the female connector 4 in the same way as the first embodiment as shown in FIG. 4D. In this case as well, the antenna length is set equal to λ/2. Such a disposition method can be conducted on the auxiliary antenna 17 in the embodiment as well.

### <Second Example>

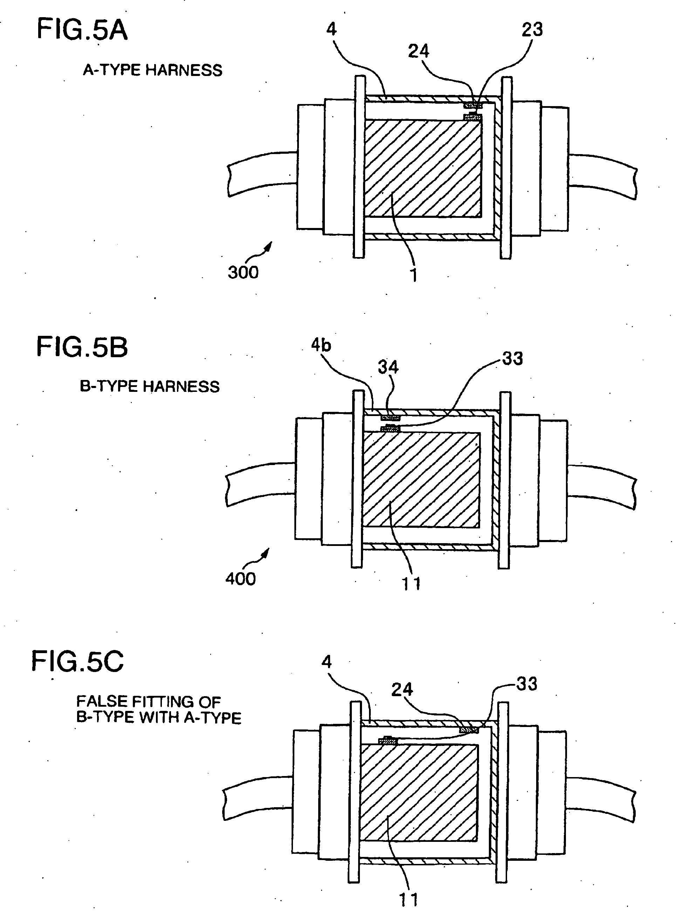

In a second example, a method of preventing false fitting of connectors when a plurality of wire harnesses are included and connectors having the same shape are used will now be described. FIGS. 5A-5C are concept diagrams showing states in which wireless IC tags are mounted respectively so as to be associated with fitting purposes in wire harnesses having the same shape. In the case of A-type harness 300, an IC chip 23 having a minute antenna is mounted on a forefront portion of the male connector 1 as shown in FIG. 5A. An antenna (auxiliary antenna) 24 is mounted in a position (i.e., the interior part) deviated at spacing of, for example, 0.5 mm from the minute antenna of the IC chip 23 on the female connector 4 so as to be able to receive a radio wave from the minute antenna of the IC chip 23. In FIG. 5A, an antenna 24, the IC chip 23, and its minute antenna are shown in the overlapped state for convenience. When the male connector 1 is fitted into the female connector 4 normally, therefore, the information stored in the IC chip 23 is transmitted from the minute antenna in the same way as the previously described embodiments, amplified by the antenna 24, and transmitted to the outside. Therefore, it can be detected that the male connector 1 in the A-type harness 300 is fitted into the female connector 4 normally, by reading the information stored in the IC chip 23.

In the case of a B-type harness 400, (i.e., a harness of a second type different from the A-type harness) an IC chip 33 having a minute antenna is mounted on a back portion of a male connector 11, and an antenna (auxiliary antenna) 34 is mounted on a female connector 4b in a position (i.e., an input portion of the female connector 4b) deviated with an interval of, for example, 0.5 mm from the minute antenna of the IC chip 33, as shown in FIG. 5B. In FIG. 5B, an antenna 34, an IC chip 33, and its minute antenna are shown in the overlapped state for convenience. When the male connector 11 is fitted into the female connector 4b normally, therefore, the information stored in the IC chip 33 is transmitted from the minute antenna, amplified by the antenna 34, and transmitted to the outside. Therefore, it can be detected that the male connector in the B-type harness 400 is fitted into the female connector normally, by reading the information stored in the IC chip 33.

If a mistake is made in the combination of the connectors in the A-type harness 300 and the connectors in the B-type harness 400 and false fitting is conducted, the information stored in the IC chip is not transmitted to the outside. In other words, if the male connector 11 in the B-type harness 400 is fitted into the female connector 4 in the A-type harness 300, as shown in FIG. 5C, the distance between the IC chip 33 disposed on the male connector 11 and the antenna 24 disposed on the female connector 4 is great, and consequently the information stored in the IC chip 33 is not transmitted by the antenna 24. Therefore, it is not possible to read the information stored in the IC chip 33 from the outside, and consequently it can be detected that the fitting is false fitting. If disposition positions of the IC chip and the antenna are changed and set from harness to harness, therefore, false fitting can be detected even if a large number of harnesses are used.

A method of preventing false connection in harnesses by using a computer will now be described.

First, when manufacturing a wire harness, IC chips are mounted respectively on the male connector and the female connector, and their ID numbers are recorded in a database. If the male connector is fitted into the female connector normally, each of the IC chips can conduct transmission owing to the function of the auxiliary antenna as shown in FIG. 2B in the same way as the above-described examples and embodiments. At that time, bits in a transmission signal caused by radio interference are output in an OR form. Therefore, this information is recorded in the database. At this time, it is confirmed that the bit signal of the OR is not output when a male connector is fitted into a female connector in a different combination. Subsequently, the male connector and the female connector are mounted on, for example, an automobile electrical component or a semiconductor manufacturing apparatus. If the male connector is fitted into the female connector normally, the registered combinational bits are output in the OR form. Therefore, this OR signal is compared and collated with OR information recorded in the database. If the output OR signals are, for example, registered ID1 and ID2 as a result of the comparison and collation, the male connector is judged to have been fitted into the female connector normally. In the same way, in an IC chip having a congestion function, a decision concerning the fitting can be made by recording IDs of connectors in the database and comparing and collating two coupled ID information data. According to such a technique, false harness connection can be detected even if the disposition positions of the IC chip and the auxiliary antenna are not shifted in every wire harness.

If the male connector is fitted into the female connector normally even in a harness including a minute antenna, an ordinary antenna, and an auxiliary antenna as shown in FIGS. 3A-3B, normal OR signals are output as, for example, ID1 and ID2. As a result, it can be determined that the male connector is fitted into the female connector normally.

### <Third Example>

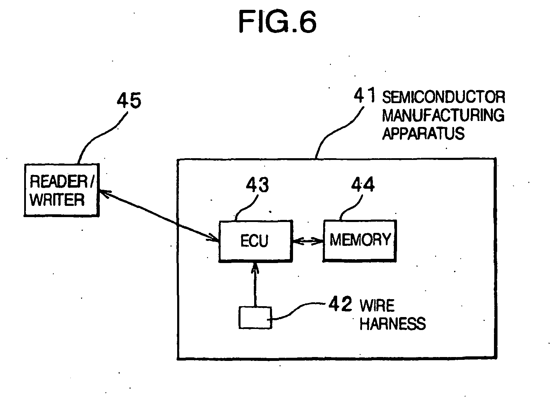

The IC tag-mounted harness having the above-described configuration can be used for wiring systems of semiconductor manufacturing apparatuses, various electrical apparatuses, and automobile electrical components. Hereafter, taking a wiring system of a semiconductor manufacturing apparatus having a large number of harnesses as an example, a harness mounting method used when mounting wire harnesses on the semiconductor manufacturing apparatus by using IC tag-mounted harnesses according to the present invention will be described as a third example. FIG. 6 is a concept diagram of a semiconductor manufacturing apparatus for implementing a harness mounting method. As shown in FIG. 6, at least an ECU (electronic control unit) 43 for reading ID information of a wire harness 42 and exercising various kinds of control, and a memory 44 provided outside or inside the ECU 43 to store ID information of the IC tag-mounted wire harness 42 are mounted on a semiconductor manufacturing apparatus 41. A reader/writer 45 disposed outside the semiconductor manufacturing apparatus 41 can read the ID information of the wire harness 42 from the ECU 43.

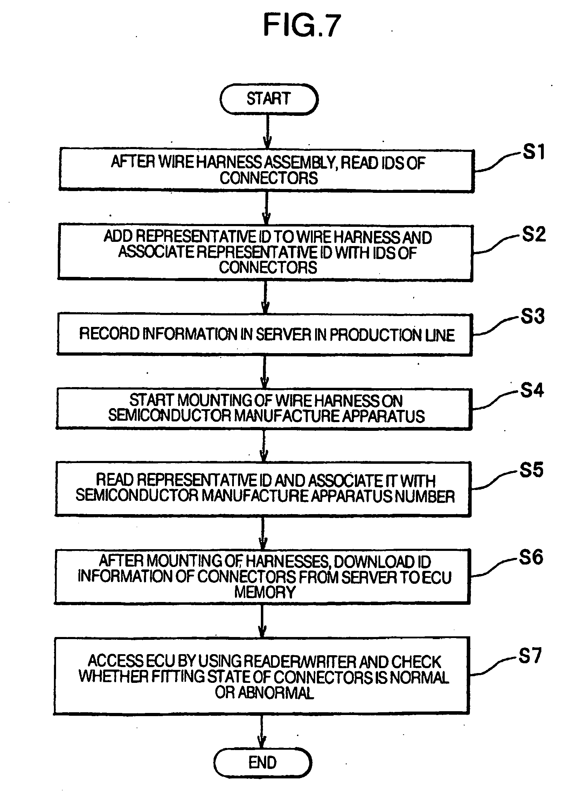

FIG. 7 is a flow chart for implementing a method of mounting a harness on a semiconductor manufacturing apparatus. In this flow chart, a wire harness assembly process and a process for mounting wire harnesses on the semiconductor manufacturing apparatus are shown. First, in the wire harness assembly process, IDs of connectors are read at the time of energization test after completion of the wire harness assembly (step S1). Subsequently, an IC tag is mounted on the wire harness including the connectors, and a representative ID is added to the IC tag and associated with the IDs of the connectors (step S2). In addition, these kinds of information are recorded in a server in a production line (step S3). The assembly process of the wire harness 42 is thus finished.

Subsequently, in the process of mounting the wire harness 42 on the semiconductor manufacturing apparatus 41, work of mounting the wire harness 42 on the semiconductor manufacturing apparatus 41 is started (step S4). The representative ID of the wire harness 42 is read, and the representative ID is associated with an apparatus number of the semiconductor manufacturing apparatus 41 (step S5). In addition, after respective wire harnesses and the ECU 43 are mounted and inspection of the wiring line is finished, IDs of the connectors are associated with the representative ID of the wire harness 42, and downloaded from the server to the memory 44 via the ECU 43 (step S6).

As for components other than the connectors as well, ID information of components (such as important security components) provided with IDs is downloaded to the memory 44. At the time of inspection of the semiconductor manufacturing apparatus 41 or at the time of connection from the semiconductor manufacturing apparatus 41 to a network, therefore, repair or the like can be conducted on the basis of information of the components.

At step S6, the representative ID of the wire harness 42 and IDs of the connectors are associated with each other and stored in the memory 44. If the reader/writer 45 accesses the ECU 43, therefore, the representative ID of the wire harness 42 and IDs of the connectors stored in the memory 44 are read into the reader/writer 45 and it is checked whether the fitting state of the connectors are normal (step S7). The process of mounting the wire harness on the semiconductor manufacturing apparatus is thus finished.

In the examples and embodiments mentioned above, harnesses are described as to connect first electric members to one or more second electric members. The harnesses, however, in this invention are not only limited to the usage of connecting members electrically, but also for any usage of connecting one or more non-electric members to each other, e.g. optical fibres.

## Claims

1. A harness assembly with a wireless IC tag (18), the harness assembly adapted to connect a first member and a second member, the wireless IC tag including an IC chip for recording information and an antenna for conducting wireless transmission of the information recorded on the IC chip, the harness assembly comprising:
a first connector (1) mounting thereon a first IC chip (12) to record first information, and a first antenna (13) to transmit, with a weak radio wave, the information recorded in said first IC chip (12), wherein one end of the first connector (1) is connected to a first member (6);
a second connector (4) mounting thereon an auxiliary antenna (17) adapted to amplify a radio wave emitted by said first antenna (13) and to transmit the amplified radio wave, wherein one end of the second connector (4) is connected to members (7) other than the first member,
wherein the auxiliary antenna (17) is mounted so as to be located in a position suitable for amplifying the radio wave emitted by said first antenna (13), and transmitting the amplified radio wave, when another end of said first connector (1) and another end of said second connector (4) are fitted into one another normally;
**characterized in that**
the first connector further comprises a second IC chip (14) to record second information, and a second antenna (15) to transmit, with a strong radio wave, the information recorded in said second IC chip (14), and
the auxiliary antenna (17) is adapted to hang over the second antenna (15) and to intercept the strong radio wave emitted by the second antenna (15) when the first and second connectors are fitted into one another normally.

2. The harness assembly according to claim 1, wherein the auxiliary antenna (17) is mounted so as to surround an insertion end in an accepting frame at right angles to an insertion direction of said second connector (4), take a shape of it, and have an electrical length of λ/2, where λ is a wavelength of a radio wave in use.

3. The harness assembly according to claim 1, wherein the auxiliary antenna (17) is mounted at right angles to an insertion direction of the second connector (4) so as to form at least two turns and surround an insertion end in an accepting frame and so as to be connected to ground at one end.

4. The harness assembly according to claim 1, wherein a plurality of harnesses (200) are provided, and positions of antennas (13, 15, 17) mounted on the first connector (1) and the second connector (4) differ from harness to harness.

5. The harness assembly according to claim 1, wherein a plurality of harnesses (200) are provided, and it is checked whether the first connectors (1) and the respective second connectors (2) are coupled to one another in each of the harnesses on the basis of ID information described in the first connector and the second connector.

## Patentansprüche

1. Kabelstranganordnung mit einem kabellosen IC-Tag (18), wobei die Kabelstranganordnung dazu ausgelegt ist, ein erstes und ein zweites Element zu verbinden, wobei der kabellose IC-Tag einen IC-Chip zum Aufzeichnen von Informationen und eine Antenne zum Ausführen kabelloser Übertragung der auf dem IC-Chip aufgezeichneten Informationen aufweist, wobei die Kabelstranganordnung umfaßt:
ein erstes Verbindungselement (1), auf dem ein erster IC-Chip (12) zum Aufzeichnen erster Informationen und eine erste Antenne (13) zum Übertragen der auf dem ersten IC-Chip (12) aufgezeichneten Informationen mit einer schwachen Funkwelle angebracht sind, wobei ein Ende des ersten Verbindungselements (1) mit einem ersten Element (6) verbunden ist,
ein zweites Verbindungselement (4), auf dem eine Hilfsantenne (17) angebracht ist, die dazu ausgelegt ist, eine von der ersten Antenne (13) ausgesendete Funkwelle zu verstärken und die verstärkte Funkwelle zu übertragen, wobei ein Ende des zweiten Verbindungselements (4) mit anderen Elementen (7) als dem ersten Element verbunden ist,
wobei die Hilfsantenne (17) so angebracht ist, daß sie sich an einer Position befindet, die sich zum Verstärken der von der ersten Antenne (13) ausgesendeten Funkwelle und zum Übertragen der verstärkten Funkwelle eignet, wenn ein anderes Ende des ersten Verbindungselements (1) und ein anderes Ende des zweiten Verbindungselements (4) normal ineinander eingepaßt sind,
**gekennzeichnet dadurch, daß**
das erste Verbindungselement ferner einen zweiten IC-Chip (14) zum Aufzeichnen zweiter Informationen und eine zweite Antenne (15) zum Übertragen der im zweiten IC-Chip (14) aufgezeichneten Informationen mit einer starken Funkwelle aufweist, und
die Hilfsantenne (17) dazu ausgelegt ist, über der zweiten Antenne (15) zu hängen und die von der zweiten Antenne (15) ausgesendete starke Funkwelle abzufangen, wenn das erste und das zweite Verbindungselement normal ineinander eingepaßt sind.

2. Kabelstranganordnung nach Anspruch 1, wobei die Hilfsantenne (17) so angebracht ist, daß sie ein Einführende in einem Aufnahmerahmen rechtwinklig zu einer Einführrichtung des zweiten Verbindungselements (14) umgibt, dessen Form annimmt und eine elektrische Länge von λ/2 aufweist, wobei λ die Wellenlänge einer verwendeten Funkwelle ist.

3. Kabelstranganordnung nach Anspruch 1, wobei die Hilfsantenne (17) rechtwinklig zu einer Einführrichtung des zweiten Verbindungselements (4) angeordnet ist, um so mindestens zwei Biegungen aufzuweisen und ein Einführende in einem Aufnahmerahmen zu umgeben und so an einem Ende geerdet zu sein.

4. Kabelstranganordnung nach Anspruch 1, wobei mehrere Kabelstränge (200) vorgesehen sind und Positionen von auf dem ersten Verbindungselement (1) und dem zweiten Verbindungselement (4) angebrachten Antennen (13, 15, 17) von Kabelstrang zu Kabelstrang unterschiedlich sind.

5. Kabelstranganordnung nach Anspruch 1, wobei mehrere Kabelstränge (200) vorgesehen sind und auf der Grundlage von im ersten und im zweiten Verbindungselement beschriebenen Kennzeichnungsinformationen überprüft wird, ob die ersten Verbindungselemente (1) und die jeweiligen zweiten Verbindungselemente (2) in jedem der Kabelstränge miteinander verbunden sind.

## Revendications

1. Ensemble de faisceau ayant une étiquette IC sans fil (18), l'ensemble de faisceau étant adapté pour connecter un premier élément et un second élément, l'étiquette IC sans fil incluant une puce IC pour enregistrer des informations et une antenne pour effectuer une transmission sans fil des informations enregistrées sur la puce IC, l'ensemble de faisceau comportant :
un premier connecteur (1) sur lequel est monté une première puce IC (12) pour enregistrer des premières informations, et une première antenne (13) pour transmettre, à l'aide d'une faible onde radio, les informations enregistrées dans ladite première puce IC (12), une extrémité du premier connecteur (1) étant reliée à un premier élément (6),
un second connecteur (4) sur lequel est monté une antenne auxiliaire (17) adaptée pour amplifier une onde radio émise par ladite première antenne (13) et pour transmettre l'onde radio amplifiée, une extrémité du second connecteur (4) étant reliée aux éléments (7) autres que le premier élément,
dans lequel l'antenne auxiliaire (17) est montée de manière à être localisée dans une position appropriée pour amplifier l'onde radio émise par ladite première antenne (13), et transmettant l'onde radio amplifiée, lorsqu'une autre extrémité dudit premier connecteur (1) et une autre extrémité dudit second connecteur (4) sont ajustées l'une dans l'autre normalement,
**caractérisé en ce que**
le premier connecteur comporte en outre une seconde puce IC (14) pour enregistrer des secondes informations, et une seconde antenne (15) pour transmettre, à l'aide d'une puissante onde radio, les informations enregistrées dans ladite seconde puce IC (14), et
l'antenne auxiliaire (17) est adaptée pour maintenir la seconde antenne (15) et pour intercepter la puissante onde radio émise par la seconde antenne (15) lorsque les premier et second connecteurs sont ajustés l'un dans l'autre normalement.

2. Ensemble de faisceau selon la revendication 1, dans lequel l'antenne auxiliaire (17) est montée de manière à entourer une extrémité d'insertion dans un châssis accepteur à angles droits dans une direction d'insertion dudit second connecteur (4), prendre une forme de celui-ci, et avoir une longueur électrique de λ/2, où λ est une longueur d'onde d'une onde radio en cours d'utilisation.

3. Ensemble de faisceau selon la revendication 1, dans lequel l'antenne auxiliaire (17) est montée à angles droits dans une direction d'insertion du second connecteur (4) de manière à former au moins deux tours et à entourer une extrémité d'insertion dans un châssis accepteur et de manière à être connectée à la masse à une extrémité.

4. Ensemble de faisceau selon la revendication 1, dans lequel une pluralité de faisceaux (200) sont fournis, et des positions d'antennes (13, 15, 17) montées sur le premier connecteur (1) et le second connecteur (4) diffèrent d'un faisceau à l'autre.

5. Ensemble de faisceau selon la revendication 1, comprenant une pluralité de faisceaux (200), et on contrôle si les premiers connecteurs (1) et les seconds connecteurs (2) respectifs sont mutuellement couplés dans chacun des faisceaux sur la base d'informations ID décrites dans le premier connecteur et le second connecteur.
